# DEMANDE DE BREVET EUROPEEN

(11) **EP 1 882 881 A1**
(43) Date de publication de la demande: **30.01.2008**
(21) Numéro de dépôt: 07301211.4
(22) Date de dépôt: 09.07.2007
(51) Int. Cl.: F21V 15/06, F21V 17/00, F21W 101/00

(54) **Dispositif d'éclairage et/ou de signalisation multifonctions à protection thermique pour véhicule**

(30) Priorité: 24.07.2006 FR 0653087
(71) Demandeur: PEUGEOT CITROËN AUTOMOBILES S.A., 78140 Velizy Villacoublay (FR)
(72) Inventeur: Peron, Rodolphe, 95220 Herblay (FR)
(74) Mandataire: Vigand, Régis Louis Michel

(57) **Abrégé**

- Le dispositif comporte un boîtier, une glace transparente et un masque (3) intermédiaire conformé pour recevoir les différentes fonctions du dispositif.
- Il comporte, de plus, au moins entre une première fonction (F₂) et une seconde fonction (F₃), adjacente à la première fonction (F₂), une plaque (4) de dissipation de la chaleur permettant de protéger ladite première fonction (F₂) de la chaleur émise par ladite seconde fonction (F₃).
- Véhicules automobiles. Dispositifs d'éclairage et/ou de signalisation des véhicules. Feux multifonctions des véhicules.

## Description

La présente invention concerne un dispositif d'éclairage et/ou de signalisation multifonctions à protection thermique pour véhicule.

Pour mieux souligner les lignes du bouclier arrière d'un véhicule automobile, il est fait usage sur certains modèles de feux dits « multifonctions ». Ce sont des feux dans lesquels sont intégrés plusieurs fonctions d'éclairage ou de signalisation. A titre d'exemple, de tels feux multifonctions peuvent être des feux placés à l'arrière du véhicule et comprendre des feux arrière à diodes électroluminescentes, un feu clignotant, un feu de recul, un feu de stop, un feu anti-brouillard, etc.

De tels feux multifonctions comprennent un boîtier, une glace transparente et une pièce intermédiaire ou masque, située derrière la glace transparente, configurée pour recevoir toutes les fonctions. Le boîtier et la pièce intermédiaire sont généralement en matière plastique. Lors de l'éclairage d'une fonction, la chaleur dégagée par l'ampoule de cette fonction peut être intense et chauffer de manière importante l'air intérieur. Cet air chaud s'élève pour venir réchauffer la partie supérieure de cette fonction et, par conséquent, la partie inférieure de la fonction située au-dessus. Dans certaines applications, par exemple dans le cas d'un projecteur anti-brouillard, cette élévation de température peut produire une déformation du masque et un dépositionnement de la glace transparente. On sait notamment que dans un projecteur antibrouillard la température de certaines zones peut atteindre 200°C.

Pour cette raison, on a cherché à perfectionner les dispositifs d'éclairage et/ou de signalisation automobile, de manière à avoir un masque intermédiaire qui risque moins de se déformer sous l'effet de la chaleur.

Ainsi, on connaît, selon la demande de brevet européen n° EP 1 150 062 A1, un dispositif d'éclairage ou de signalisation pour véhicule (par exemple, un projecteur, un projecteur antibrouillard ou un feu de signalisation), qui comporte un boîtier, une glace, une pièce intermédiaire reliant la glace au boîtier et un écran thermique relié directement au boîtier en formant une seule pièce avec le boîtier (les deux pièces venant ensemble de moulage, par exemple). Avec cette construction, la pièce intermédiaire risque moins de se déformer du fait des élévations importantes de température.

Le brevet des Etats-Unis d'Amérique n° 5 204 578 décrit un moyen de dissipation de chaleur pour une lampe à halogène métal pour véhicule automobile. Ce moyen est réalisé en aluminium ou en céramique, et il est fixé à la paroi du tube à régime d'arc. Il permet d'avoir plus de lumière lors de l'allumage de la lampe, en régulant la condensation du mercure à l'intérieur du tube à régime d'arc de la lampe.

Le brevet des Etats-Unis d'Amérique n° 6 450 670 B1 décrit un dispositif de lampe, qui comporte un boîtier définissant un logement interne avec au moins un côté à une ouverture, une plaque de transfert de chaleur fixée à l'un desdits côtés du logement interne, disposée à l'extérieur dudit logement, et au moins partiellement alignée avec ladite ouverture de façon à évacuer de la chaleur du boîtier de la lampe. Le dispositif de lampe peut également comporter un joint rigide d'étanchéité disposé entre la plaque de transfert de chaleur et le côté déjà mentionné du boîtier. De plus, le dispositif peut aussi comporter un écran d'ampoule avec un bras relié à la plaque de transfert de chaleur, et une coque reliée au bras opposé à la plaque de transfert. La coque est configurée pour couvrir au moins en partie une ampoule du dispositif.

Les dispositifs d'éclairage et/ou de signalisation mentionnés ci-dessus sont des dispositifs à une seule lampe ou à une seule fonction.

De plus, les dispositifs d'éclairage et/ou de signalisation mentionnés ci-dessus sont équipés de moyens de protection thermique (écrans) qui sont solidaires du boîtier, et le plus souvent moulés avec le boîtier. Par conséquent, ces moyens de protection thermique de l'art antérieur sont en général visibles de l'extérieur à travers la glace transparente du dispositif. Ils ont un impact plutôt négatif sur le design ou style du véhicule.

Le but de la présente invention est de fournir un nouveau dispositif d'éclairage et/ou de signalisation, qui comporte un moyen de protection thermique rapporté, amovible, pour éviter des échanges thermiques trop importants entre deux fonctions du même dispositif.

En d'autres termes, le but de la présente invention est de fournir un nouveau dispositif d'éclairage et/ou de signalisation multifonctions, dans lequel le moyen de protection thermique, dans certaines situations et sous certaines conditions, puisse ne pas être installé ou puisse être enlevé après une première installation, et de préférence facilement.

Un autre but de la présente invention est de fournir un nouveau dispositif d'éclairage et/ou de signalisation multifonctions à protection thermique efficace, même dans le cas où les fonctions sont très rapprochées les unes des autres.

Un autre but de la présente invention est de fournir un tel dispositif d'éclairage et/ou de signalisation multifonctions avec une protection thermique qui puisse être adaptée à tout type de feu de véhicule.

C'est également un but de la présente invention de fournir un tel dispositif qui comporte une protection thermique sans influence visible au niveau du style de la carrosserie. De préférence, la plaque (4) de dissipation est située à l'arrière du masque (3) qui la rend invisible de l'extérieur du dispositif.

C'est aussi un but de la présente invention de fournir un tel dispositif d'éclairage et/ou de signalisation multifonctions avec une protection thermique de construction simple, de montage facile, de fonctionnement fiable, efficace, de structure robuste, économique, adaptable et qui ne soit pas une source de bruit et, plus généralement, de vibrations.

Pour parvenir à ces buts, la présente invention conçoit un nouveau dispositif d'éclairage et/ou de signalisation multifonctions à protection thermique pour véhicule, qui comporte un boîtier, une glace transparente et un masque intermédiaire conformé pour recevoir les différentes fonctions. Le dispositif comporte, de plus, au moins entre une première fonction et une seconde fonction adjacente à la première fonction, une plaque de dissipation de la chaleur permettant de protéger ladite seconde fonction de la chaleur émise par ladite première fonction.

De préférence, la plaque de dissipation de la chaleur « épouse » la forme du masque dans sa zone relative à la partie supérieure de la première fonction.

De préférence également, la plaque de dissipation de la chaleur est située juste au-dessus d'une large ouverture prévue dans le masque, de façon à diriger de la chaleur vers cette ouverture.

Selon un mode de réalisation préféré de l'invention, la plaque de dissipation de la chaleur est montée fixe sur le masque par simple glissement sur des moyens de positionnement et de fixation solidaires du masque.

Selon le même mode préféré de réalisation de l'invention, les moyens de positionnement et de fixation de la plaque de dissipation de la chaleur comprennent une paire de glissières destinées à recevoir chacune une partie d'extrémité longitudinale de la plaque de dissipation de la chaleur et positionner cette dernière, et une paire de clips destinés à fixer ladite plaque en position.

De manière préférentielle, les glissières sont sensiblement dans un plan horizontal et lesdites parties d'extrémité de la plaque sont conformées pour être glissées par concordance de formes dans lesdites glissières, par repli des bords de la plaque, par exemple.

De préférence, la plaque de dissipation de la chaleur est montée par glissement dans les glissières avec une légère contrainte longitudinale.

De préférence également, chaque glissière présente dans sa partie d'entrée une légère pente permettant de mettre en contrainte la plaque de dissipation de la chaleur lors de son montage sur la glissière.

Selon le mode préféré de réalisation de l'invention également, chaque clip présente une forme générale sensiblement en forme de pince, la plaque métallique étant montée par glissement dans le clip avec une légère contrainte, de façon à éviter toute vibration de la plaque et tout mouvement de celle-ci selon la direction verticale.

Les glissières et les clips sont réalisés, de préférence, monobloc avec le masque.

Selon un mode préféré de réalisation, les glissières et les clips sont réalisés par moulage ensemble avec le masque.

La plaque de dissipation de la chaleur est, de préférence, une plaque métallique.

La seconde fonction peut être située immédiatement au-dessous de la première fonction, ou bien immédiatement à-côté de la première fonction. La seconde fonction peut être très proche de la première fonction.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue frontale générale, en perspective, d'un exemple de feu multifonction de véhicule,
- la figure 2 est une vue frontale, en perspective, du masque du feu multifonction de la figure 1,
- la figure 3 est une vue arrière, en perspective, du masque du feu multifonction des figures 1 et 2,
- la figure 4 est une vue frontale agrandie, en perspective, d'une partie du masque d'un feu multifonction avec une plaque de dissipation de chaleur intercalée entre deux fonctions, selon un premier mode de réalisation de la présente invention,
- la figure 5A est une vue frontale agrandie, en perspective, de la partie de masque de la figure 4, dans laquelle sont représentés les moyens de positionnement et de fixation de la plaque de dissipation de chaleur selon la présente invention, ladite plaque n'étant pas elle-même représentée,
- la figure 5B est une vue frontale, en perspective, de la plaque de dissipation de chaleur selon le premier mode de réalisation de la présente invention, représentée isolément avec ses moyens de positionnement et de fixation associés,
- la figure 6 est une vue frontale, en perspective, d'un clip de fixation de la plaque de dissipation de chaleur, selon la présente invention,
- la figure 7 est une vue frontale, en perspective, d'une glissière de positionnement de la plaque de dissipation de chaleur, selon la présente invention,
- la figure 8A est une vue frontale agrandie, en perspective, d'une partie du masque d'un feu multifonctions avec une plaque de dissipation de chaleur installée, selon un deuxième mode de réalisation de la présente invention,
- la figure 8B est une vue frontale, en perspective, de la plaque de dissipation de chaleur de la figure 8A avec ses moyens de positionnement et de fixation,
- les figures 9A à 9G sont des vues frontales, en perspective, de différents modes de réalisation de la plaque de dissipation de chaleur qui constitue l'élément essentiel de la protection thermique selon la présente invention.

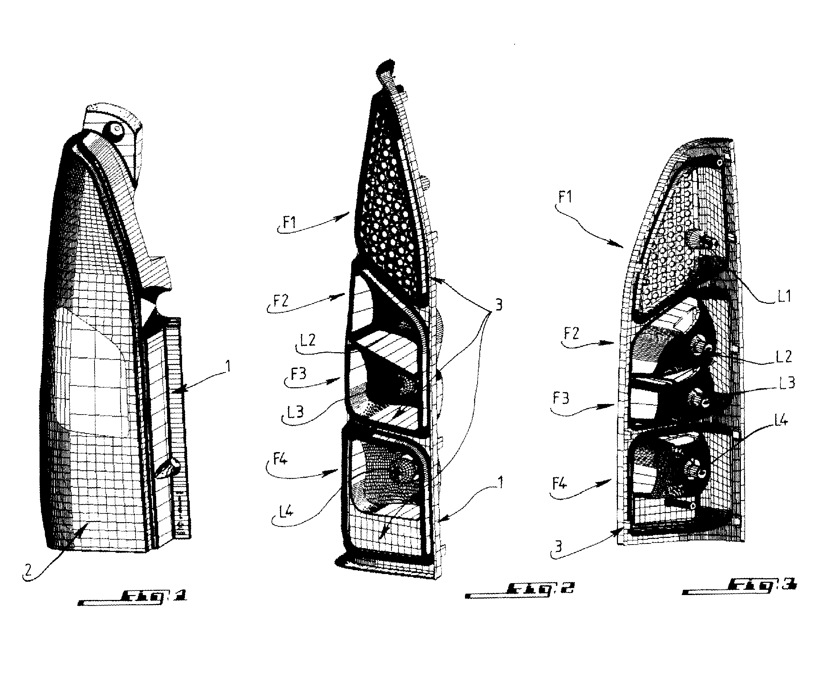

En référence au dessin de la figure 1, un feu de véhicule automobile, en particulier un feu d'éclairage et/ou de signalisation, à plusieurs fonctions, comprend un boîtier 1, le plus souvent en matière plastique, et une glace transparente 2 qui recouvre en couvercle le boîtier 1.

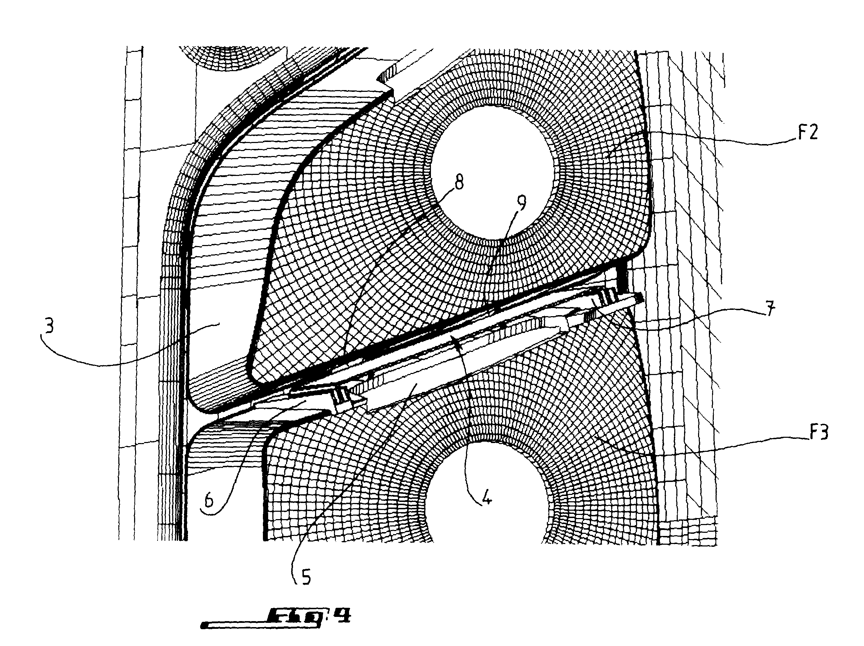

Si l'on ôte la glace transparente 2 (voir figure 2), on voit que le feu d'éclairage et/ou de signalisation comprend aussi un masque 3. Le masque 3 est situé derrière la glace transparente 2 ; il est, par conséquent, visible de l'extérieur et confère au feu d'éclairage et/ou de signalisation son effet stylistique. Par exemple, s'il s'agit d'un feu multifonction arrière, il souligne et accentue les lignes du bouclier arrière du véhicule. Toujours en référence au dessin de la figure 2, le masque 3 est conformé pour constituer les masques élémentaires de plusieurs feux de fonctions différentes, qui sont, à titre d'exemple, les fonctions F₁ à F₄. La fonction F₁ peut être une fonction feu arrière à diodes électroluminescentes (DEL). Les feux arrière à DEL ne requièrent pas d'entretien et diffusent une lumière brillante au freinage pour les conducteurs qui suivent. Les fonctions F2, F3, F4, peuvent être des fonctions d'éclairage ou de signalisation à ampoule L₂, L₃, L₄, telles qu'une fonction de feu clignotant, ou de feu de recul, ou de feu de stop, ou de feu anti-brouillard, etc.

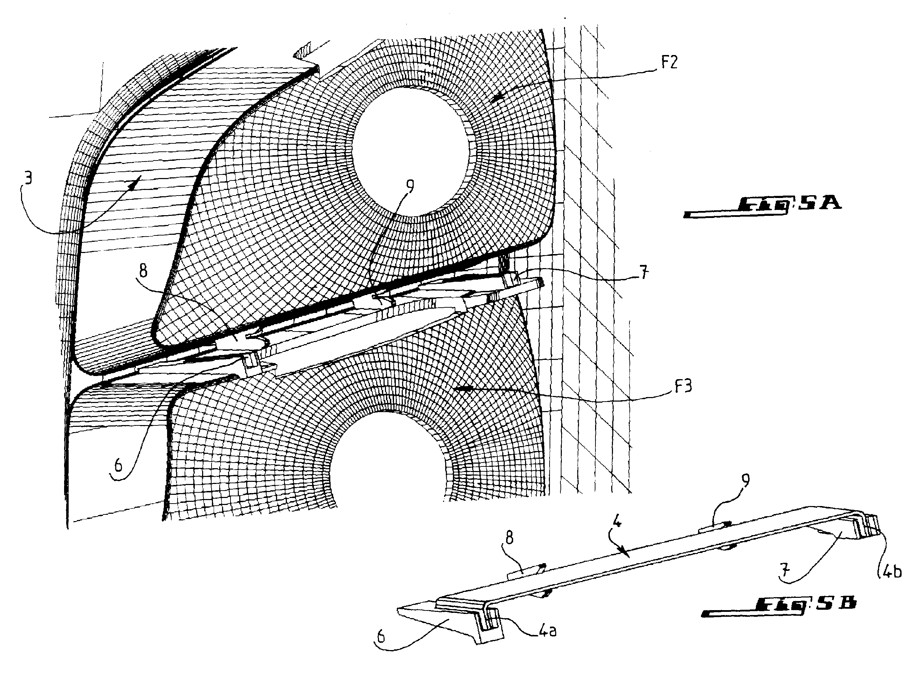

L'arrière du masque 3 est représenté sur le dessin de la figure 3. Comme on peut le voir sur cette figure 3, les deux fonctions F₂ et F₃ sont très rapprochées. Ces deux fonctions très rapprochées, F₂ et F₃, sont mieux représentées sur le dessin de la figure 4.

Lors de l'éclairage de la fonction F₃, par exemple, une chaleur plus ou moins intense se dégage. Si la fonction F₃ est une fonction de feu antibrouillard, ce dégagement de chaleur peut être relativement important. La chaleur émise se dirige vers le haut et chauffe la partie inférieure de la fonction F₂. Le dégagement de chaleur peut ainsi provoquer une déformation du masque 3, lequel est une pièce en matière plastique, par exemple de type ABS (acronyme pour « Acrylonitrile Butadiène Styrène »). Il faut donc éviter un échange thermique trop important entre les fonctions F₂ et F₃. Pour cela, conformément au principe général de la présente invention, on intercale entre les deux fonctions F₂ et F₃ une plaque de dissipation de chaleur 4, qui est, de préférence une plaque métallique. La plaque de dissipation de chaleur 4 - appelée aussi dans la suite du texte la plaque métallique 4 - est découpée et emboutie à la forme du masque 3, telle que cette forme est définie par le bureau de style ou design. Sa position entre les deux fonctions permet de diriger une partie de la chaleur vers l'ouverture large 5 en partie supérieure de la fonction F₃.

La plaque métallique 4 est positionnée et retenue en position grâce à des moyens de positionnement et de fixation, qui apparaissent mieux sur le dessin de la figure 5A. Ils comprennent une paire de glissières, 6 et 7, situées sur les côtés de l'espace compris entre les deux fonctions F₂ et F₃, et une paire de clips, 8 et 9, à l'intérieur de la distance entre les deux glissières 6 et 7. Les glissières 6 et 7 sont sensiblement horizontales, et sortent directement du masque lors du moulage de ce dernier. Les clips 8 et 9 sont également sensiblement horizontaux, présentent une forme générale de pince et sont également sortis directement du masque 4 lors du moulage.

Les bords latéraux 4a et 4b de la plaque 4 sont repliés et viennent se placer dans les glissières 6, 7, respectivement, comme on peut le voir sur le dessin de la figure 4 et sur le dessin de la figure 5B. La plaque métallique 4, lors du montage de celle-ci, vient se glisser dans les clips 8 et 9 dans les pinces desquels elle est immobilisée.

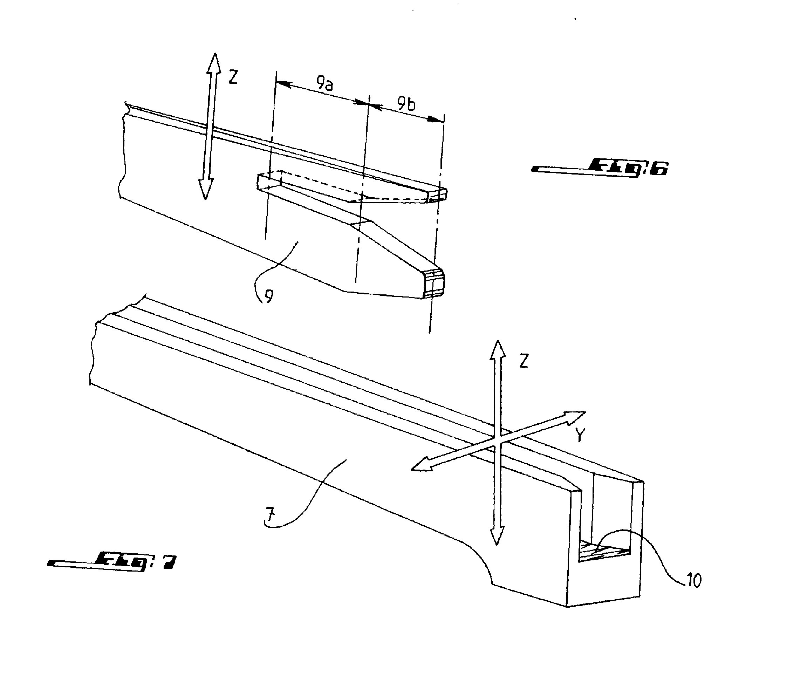

Un clip de retenue selon la présente invention, référencé 9, est représenté sur le dessin de la figure 6. Il comprend une partie 9a comportant une rainure dans laquelle se glisse l'épaisseur de la plaque métallique 4, et une partie d'attaque 9b formant guide pour l'insertion de la plaque métallique 4 dans le clip.

La plaque métallique 4 vient se glisser dans les clips 8 et 9 avec une légère contrainte, afin d'éviter toute vibration de celle-ci. De cette façon, aucun mouvement selon la direction verticale (Direction Z sur la figure 6) n'est autorisé.

Sur le dessin de la figure 7, on a représenté une glissière 7 selon la présente invention. Il est prévu une légère pente, référencée 10, au niveau de l'entrée de la glissière, qui permet de mettre en contrainte la plaque métallique 4. La plaque métallique 4 se trouve alors bloquée dans la direction de l'axe Z et dans la direction de l'axe Y, dès lors qu'elle a été mise en place dans les glissières 6 et 7 et les clips 8 et 9.

Comme déjà mentionné, la forme des moyens de positionnement et de fixation de la plaque métallique 4, à savoir la forme des glissières 6 et 7 et la forme des clips 8 et 9 seront sorties directement en moulage avec le moulage du masque 3. Le système comprenant les glissières et les clips est identique dans son principe et ses éléments essentiels quelque soit le style du masque, et est toujours présent, obtenu par moulage, que l'on décide ou non d'insérer la plaque métallique de dissipation de chaleur. Suivant le style de masque, seule la position des glissières et des clips est changée, ainsi que la forme de la plaque métallique qui vient « épouser » la forme de la fonction.

On a donc un principe standard de mise en oeuvre de la présente invention, qui s'applique sur tous les types de feux d'éclairage et/ou de signalisation multifonctions de véhicule.

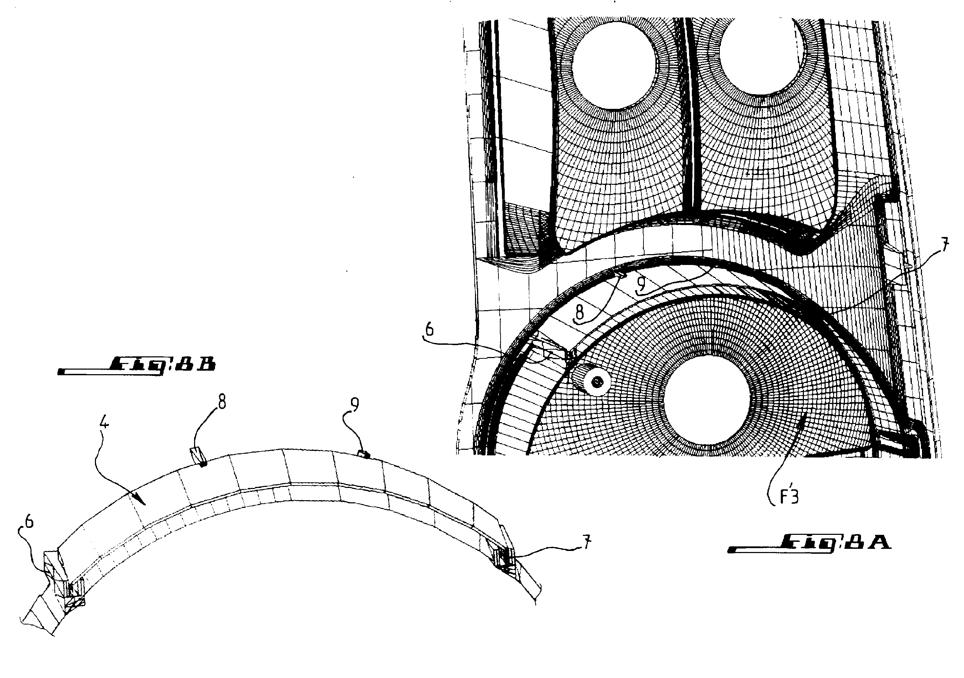

On a représenté sur les figures 8A et 8B un autre exemple de réalisation de l'invention, non limitatif de l'objet de l'invention, dans lequel la forme du masque est une forme en parabole.

Les éléments des figures 8A et 8B, qui sont identiques ou similaires aux éléments des figures précédentes, sont désignés par les mêmes références numériques.

Le masque de la fonction F'₃ est un masque de forme parabolique. La plaque métallique 4 est, en conséquence, de forme correspondante, parabolique. Les moyens de positionnement et de fixation, c'est-à-dire les glissières 6, 7 et les clips 8, 9 sont identiques dans leur forme à ceux du mode de réalisation précédent des figures 4, 5A et 5B, mais leur position est différente, pour tenir compte de la forme parabolique du masque.

Sans modifier le principe et les caractéristiques essentielles de la présente invention, il est possible de donner une grande variété de formes différentes à la plaque métallique 4 de dissipation de la chaleur, et dans tous les cas, on retrouve sur la plaque 4 une forme spécifique qui permet le positionnement et la fixation de la plaque métallique 4 dans les glissières 6, 7. Des exemples de formes de plaques 4 métalliques, non limitatifs de l'objet de la présente invention, sont représentés sur les dessins des figures 9A à 9G.

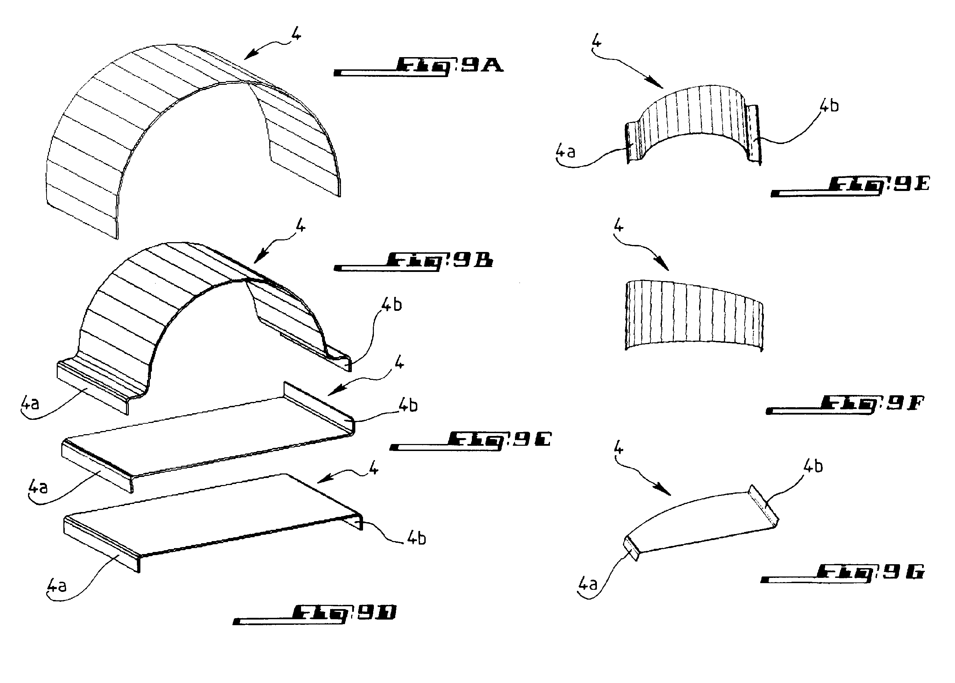

La plaque 4 de la figure 9A est sensiblement semi cylindrique et vient se positionner dans les glissières 6 et 7 avec une légère contrainte. La plaque 4 de la figure 9B, également sensiblement semi cylindrique, présente, en variante, des rebords repliés, 4a et 4b, destinés à venir se glisser dans les glissières 6 et 7. Les plaques 4 des figures 9C et 9D sont des plaques planes, avec des rebords 4a, 4b, repliés l'un et l'autre en sens contraire (figure 9C) ou dans le même sens (figure 9D). Les figures 9E et 9F représentent des variantes des figures 9B et 9A, respectivement, dans lesquelles la largeur de la plaque 4 n'est pas uniforme. La plaque 4 de la figure 9G est une variante de la plaque de la figure 9C, dans laquelle la largeur n'est pas uniforme, mais avec une variation sensiblement parabolique.

On peut imaginer à l'infini d'autres formes pour la plaque métallique 4 en fonction de la forme de la fonction « à couvrir ». Dans tous les cas, sans sortir du principe et des caractéristiques de la présente invention, la position des glissières 6, 7, et la position des clips 8, 9, sont adaptées à la forme de la plaque métallique 4.

Un avantage important de la présente invention réside dans le fait qu'il est possible de ne pas installer la plaque de dissipation de chaleur ou bien, si elle est installée, de l'enlever dans certaines conditions. Ainsi, il est possible d'enlever la plaque 4 de dissipation de la chaleur s'il s'avère nécessaire, après des essais thermiques, d'en changer la matière constitutive. On peut également se trouver dans la situation dans laquelle, après des essais thermiques réalisés tard dans le cours du projet automobile, il soit préférable de ne pas avoir de plaque 4 de dissipation de chaleur du tout. Dans un tel cas, la présente invention offre l'avantage d'un démontage très facile de la plaque 4, sans être obligé de casser le masque 3 et son outillage, par exemple, ce qui représente un avantage économique important.

Les moyens de positionnement et de fixation, à savoir les glissières 6, 7 et les clips 8, 9, de la plaque 4 de dissipation de la chaleur sont, comme déjà mentionné plus avant dans le texte, adaptables sur tout type de feu et sont prévus dès le début du projet automobile sans entraîner de surcoût, parce qu'ils sont moulés dans - et avec - le masque 3.

De plus, les moyens de positionnement et de fixation de la plaque 4 de dissipation de la chaleur sont cachés derrière le masque 3. Ils ne sont pas visibles de l'extérieur du véhicule.

On notera que la présente invention offre l'avantage de réaliser une protection thermique entre deux fonctions qui peuvent être très rapprochées l'une de l'autre, et que la plaque 4 de dissipation de la chaleur peut être prévue et glissée dans une zone même très difficile d'accès.

Enfin, c'est aussi un grand avantage d'avoir, avec la présente invention, des moyens de positionnement et de fixation de la plaque 4 de dissipation de la chaleur, qui soient simples à mettre en place, faciles à démouler, avec des dimensions de leurs constituants qui peuvent facilement être ajustées à l'épaisseur de la plaque 4, et qui puissent permettre une mise en place en contrainte, de façon à éliminer les risques de vibration de la plaque 4 de dissipation de la chaleur.

Bien entendu, la présente invention n'est pas limitée aux modes de réalisation décrits et représentés ci-dessus simplement à titre d'exemples ; d'autres modes de réalisation peuvent être conçus par l'homme de métier sans sortir du cadre et de la portée de la présente invention.

## Revendications

1. Dispositif d'éclairage ou de signalisation multifonctions à protection thermique pour véhicule, qui comporte un boîtier (1), une glace transparente (2) et un masque (3) intermédiaire conformé pour recevoir les différentes fonctions du dispositif, **caractérisé en ce qu'**il comporte, de plus, au moins entre une première fonction (F₂) et une seconde fonction (F₃) adjacente à la première fonction (F₂), une plaque (4) de dissipation de la chaleur permettant de protéger ladite première fonction (F₂) de la chaleur émise par ladite seconde fonction (F₃).

2. Dispositif selon la revendication 1, **caractérisé en ce que** ladite plaque (4) de dissipation de la chaleur épouse la forme du masque (3) dans sa partie relative à ladite seconde fonction (F₃).

3. Dispositif selon l'une quelconque des revendications 1 et 2, **caractérisé en ce que** ladite plaque (4) de dissipation de la chaleur est située juste au-dessus d'une large ouverture (5) prévue dans le masque (3), de façon à diriger de la chaleur vers cette ouverture (5).

4. Dispositif selon l'une quelconque des revendications 1 à 3, **caractérisé en ce que** la plaque (4) de dissipation de la chaleur est montée sur la masque (3) par glissement sur des moyens de positionnement et de fixation (6, 7, 8, 9) solidaires du masque (3).

5. Dispositif selon la revendication 4, **caractérisé en ce que** lesdits moyens de positionnement et de fixation (6, 7, 8, 9) de la plaque (4) de dissipation de la chaleur comprennent une paire de glissières (6, 7) destinées à recevoir chacune une partie d'extrémité longitudinale de la plaque (4) de dissipation de la chaleur et positionner cette dernière, et une paire de clips (8, 9) destinés à retenir ladite plaque (4) en position.

6. Dispositif selon la revendication 5, **caractérisé en ce que** lesdites glissières (6, 7) sont sensiblement dans un plan horizontal et lesdites parties d'extrémité de la plaque (4) sont conformées pour être glissées par concordance de formes dans lesdites glissières (6, 7).

7. Dispositif selon la revendication 5, **caractérisé en ce que** la plaque (4) de dissipation de la chaleur est montée par glissement dans les glissières (6, 7) avec une légère contrainte longitudinale.

8. Dispositif selon la revendication 5, **caractérisé en ce que** chaque glissière (6, 7) présente dans sa partie d'entrée une légère pente (10) permettant de mettre en contrainte la plaque (4) de dissipation de la chaleur lors de son montage sur la glissière (6, 7).

9. Dispositif selon la revendication 5, **caractérisé en ce que** chaque clip (8, 9) présente une forme générale sensiblement en forme de pince, la plaque métallique (4) étant montée par glissement dans le clip (8, 9) avec une légère contrainte, de façon à éviter toute vibration de la plaque (4) et tout mouvement de celle-ci selon la direction verticale (Z).

10. Dispositif selon la revendication 5, **caractérisé en ce que** les glissières (6, 7) et les clips (8, 9) sont réalisés monobloc avec le masque (3).

11. Dispositif selon la revendication 10, **caractérisé en ce que** les glissières (6, 7) et les clips (8, 9) sont réalisés par moulage ensemble avec le masque (3).

12. Dispositif selon l'une quelconque des revendications 1 à 11, **caractérisé en ce que** la plaque (4) de dissipation de la chaleur est une plaque métallique.

13. Dispositif selon la revendication 1, **caractérisé en ce que** la seconde fonction (F₃) est située immédiatement au-dessous de la première fonction (F₂).

14. Dispositif selon la revendication 1, **caractérisé en ce que** la seconde fonction (F₂) est située immédiatement à-côté de la première fonction (F₃).

15. Dispositif selon l'une quelconque des revendications précédentes, **caractérisé en ce que** la plaque (4) de dissipation est amovible.

16. Dispositif selon l'une quelconque des revendications précédentes, **caractérisé en ce que** la plaque (4) de dissipation est située à l'arrière du masque (3) qui la rend invisible de l'extérieur du dispositif.
